# EUROPEAN PATENT SPECIFICATION

(11) **EP 1 538 071 B1**
(45) Date of publication and mention of the grant of the patent: **09.01.2008**
(21) Application number: 04027650.3
(22) Date of filing: 22.11.2004
(51) Int. Cl.: B62D 43/04

(54) **A supporting unit for an external spare wheel**
Haltevorrichtung für ein externes Reserverad
Dispositif de fixation de roue de secours externe

(30) Priority: 03.12.2003 IT TO20030970
(43) Date of publication of application: 08.06.2005
(73) Proprietor: Proma S.r.l., 81020 San Nicola la Strada (CE) (IT)
(72) Inventor: Pino, Nicola, 81100 San Leucio (CE) (IT)
(74) Representative: Lotti, Giorgio

(56) References cited:
- GB-A- 2 365 395
- US-A- 4 884 785
- US-A- 6 142 449

## Description

The present invention relates to a supporting unit for an external spare wheel as for example in US-A-6 142 449, disclosing the preamble to claim 1.

In general, supporting units of a known type are designed for supporting a spare wheel underneath the floor panel of a motor vehicle and comprise:
- a box-section bracket anchored to the floor panel;
- a bell, which can be fitted to the spare wheel and can be moved with respect to the bracket away from and towards a recovery position, in which the bell is set up against the bracket; and
- a cable for transmitting motion, which passes through the bracket and has one end anchored to the bell.

Also associated to the supporting units of the type described above is normally a recovery and clamping device, which is set inside the vehicle in a position separate from the box-section bracket, and is connected to a second end of the cable for recovery of the cable itself and for blocking sliding of the cable once the bell has been recovered and set back in its own recovery position.

In the supporting units of the type described, the possible failure of the cable for transmitting motion determines a serious drawback represented by dropping both of the bell and of the spare wheel with consequences that can be quite easily imagined, above all in the case where the vehicle is moving.

The purpose of the present invention is to provide a supporting unit for an external spare wheel which will be free from the drawback described above.

According to the present invention, said purpose is achieved by means of a supporting unit for an external spare wheel presenting the characteristics set forth in claim 1.

The invention will now be described with reference to the annexed drawings, which illustrate a non-limiting example of embodiment thereof, and in which:
- Figure 1 is a perspective view of a first preferred embodiment of the supporting unit for an external spare wheel made according to the present invention; and
- Figure 2 is a cross-sectional view of the supporting unit of Figure 1.

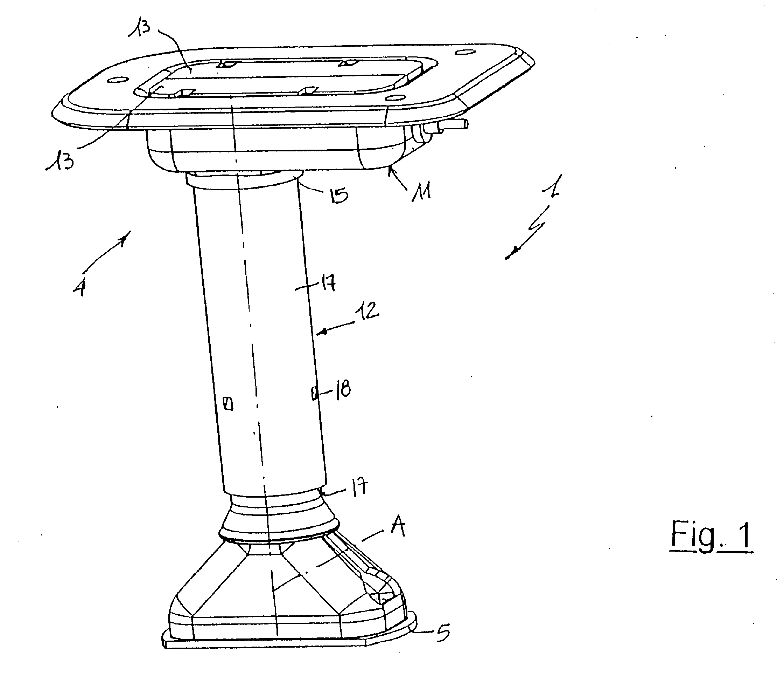

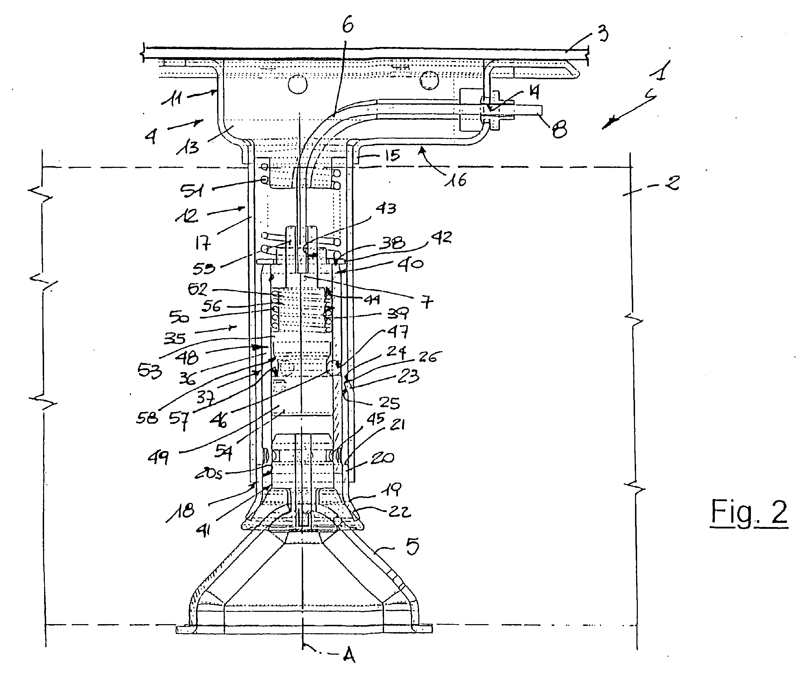

With reference to Figures 1 and 2, the reference number 1 designates, as a whole, a supporting unit for an external spare wheel, schematically illustrated with a dashed line and designated by the reference number 2.

The unit 1 is designed for supporting the spare wheel 2 underneath the floor panel 3 of a motor vehicle, and comprises a box-section bracket 4 anchored to the floor panel 3 and a bell 5, which can be fitted to the spare wheel 2 and can be moved with respect to the bracket 4 away from and towards a recovery position, in which the bell 5 is set up against the bracket 4 to clamp the wheel 2 up against the floor panel 3.

The unit 1 further comprises a cable 6 for transmitting motion, which passes through the bracket 4 and has one end 7 fixed to the bell 5 and one end 8 fixed to a recovery device (known and not illustrated) of the cable 6 itself.

The box-section bracket 4 comprises a substantially parallelepipedal anchoring base 11 and a vertical tubular body 12, which is set transverse to the base 11 and extends from the base 11 on the opposite side of the floor panel 3 with respect to the base 11 along a vertical axis A. In particular, the base 11 is defined by two cup-like half-shells 13 assembled together and has a front hole 14 and a coupling socket 15, which is fixed to a bottom wall 16 of the base 11 itself and shares the axis A.

The body 12 extends from the wall 16 along the axis A and comprises a cylindrical wall 17, which is fitted inside the coupling socket 15 and has a bottom circular portion 18 facing the bell 5. The body 12 further comprises a bottom mouth portion 19 defined by a cylindrical portion 20, which is coupled inside the wall 17 through the opening 18 and defines a shoulder 21 inside the wall 17, and a portion 22 of a substantially conical shape flared out downwards and fixed to the portion 20.

The body 12 further comprises three half-sheared portions 23, which are set upstream of the shoulder 21 along the axis A and are obtained by partial shearing of the wall 17 to extend radially towards the inside of the body 12. The three half-sheared portions 23 are uniformly distributed around the axis A, and each one has a respective top surface 24 inclined downwards and a respective side surface 25 facing the axis A and defining with the corresponding surface 24 a corresponding sharp edge 26.

The unit 1 further comprises a safety assembly 35, which is set inside the tubular body 12 and is set between the end 7 of the cable 6 and the bell 5 to secure the bell 5 in its recovery position in the event of failure of the cable 6.

The assembly 35 comprises a tubular sheath 36, which is fixed to the bell 5 and is set so that it can slide inside the body 12 along the axis A with an outer cylindrical surface 37 thereof skimming both the sharp edges 26 of the half-sheared portions 23 and an internal surface 20s of the portion 20.

The sheath 36 is delimited at the top by an annular surface 38, which is transverse to the axis A, constitutes a resting surface for a washer 42, and has an internal compartment 39 closed at the top by a plug 40 and at the bottom by a plug 41. In particular, the plug 40 is rigidly constrained to the sheath 36 and has a through hole 43 and a contrast surface 44 transverse to the axis A and facing the inside of the compartment 39. The plug 41, which is set at the opposite end of the sheath 36 with respect to the plug 40, is connected to the bell 5 and is rigidly connected to the sheath 36 by means of three hemi-spherical embossings 45 inserted inside the plug 41 and obtained by deformation of the sheath 36 itself.

The assembly 35 further comprises three blocking balls 46, which are radially mobile through respective conical windows 47 made through the sheath 36 and uniformly distributed around the axis A, and an extractor device 48, which is connected to the cable 6 and is set inside the sheath 36 for extracting the balls 46 from the sheath 36 itself, pushing them up against the body 12.

The device 48 comprises a clamping terminal 49, anchored to the end 7 of the cable 6 for transmitting motion, and a spring 50, which is set between the terminal 49 itself and the surface 44 of the plug 40 and is designed to be compressed by the terminal 49 and the surface 44 themselves either as a result of the action of the weight of the wheel 2 or, in the absence of the wheel 2 and with the bell 5 in its recovery position, as a result of the elastic action of expansion of a spring 51 compressed between the washer 42 and the wall 16 and set along the axis A.

In particular, the terminal 49 comprises: a step-like portion 52, which is inserted so that it can slide axially through the hole 43 and is fixed to the end 7; a shoulder 53, which has an external diameter substantially equal to an internal diameter of the compartment 37 and is fixed to the portion 52; and a cylindrical end portion 54, which is set axially on the opposite side of the portion 52 with respect to the shoulder 53 and axially faces the plug 41.

The step-shaped portion 52 has a hollow body 55, inside which there is inserted and clamped the end 7 of the cable 6, and a full cylindrical body 56, which has an external diameter larger than the internal diameter of the hole 43 and is set bearing upon the surface 44 so as to bring about maximum compression of the spring 50.

The spring 50 is axially compressed along the axis A between the shoulder 53 and the plug 40 and is designed to expand in the event of failure of the cable 6, thus causing axial sliding of the terminal 49 inside the compartment 37 and in the direction of the plug 41.

The device 48 further comprises an annular containment seat 57 made around the portion 54 for partially containing the balls 46, and an annular thrust ramp 58 made on the outside of the portion 54 in a position that is axially contiguous to and in communication with the annular seat 57 for pushing the balls 46 partially outside of the windows 47 themselves during axial sliding of the terminal 49.

The balls 46 are arranged in a resting position thereof both inside the seat 57 and inside the corresponding windows 47, the conical conformation of which is such as to prevent the balls 46 from coming out completely and such as to enable the balls 46 to come out only partially.

The ramp 58 is connected to the seat 57 and has a substantially conical shape, with an outer diameter which increases progressively along the axis A and in the direction of the shoulder 53 with respect to the bottom diameter of the seat 57 to force the balls 46 to protrude progressively outside of the corresponding windows 47 during expansion of the spring 50 and to block the balls 46 themselves in a respective safety position, in which the balls 46 can impact against the shoulder 20, so blocking any further axial sliding of the sheath 36 and hence preventing the bell 5 from moving away from the recovery position.

In use, the balls 46 arranged in their resting position can freely partially face outside of the corresponding windows 47 and are pushed back by the surfaces 24, 25 inside the windows 47 during the voluntary operations of moving of the bell 5 and of axial sliding of the sheath 36 inside the body 12.

At the moment when the cable 6 were to break in any point between the two ends 6 and 7, the spring 50 would be axially released and could expand, causing sliding of the terminal 49 inside the sheath 36 and, as previously described, engagement of the ramp 58 with the balls 46 as well as blocking of the balls 46 in the corresponding safety position, in which they would impact against the shoulder 52, blocking any further sliding of the terminal 41 and, hence, also of the bell 5.

Since, in the absence of the wheel 2 on the bell 5, the spring 50 would extend, with consequent blocking of the balls 46 in their safety position during recovery of the cable 6, the sheath 36, which has been inserted inside the body 12, initially comes to impinge upon the washer 42, which is set resting on the half-sheared portions 23 and consequently compresses the spring 51, so causing compression also of the spring 50 since the spring 51 prevents axial advance of the sheath 36 in favour of the axial advance of the terminal 49.

It is understood that the invention is not limited to the embodiment described and illustrated herein, which is to be considered merely as an example of embodiment of the supporting unit for an external spare wheel, it being instead possible for said supporting unit to undergo further modifications regarding shapes and arrangement of parts, and constructional and assembly details falling within the scope of the appended claims.

## Claims

1. A supporting unit (1) for an external spare wheel (2), said unit being designed to support the spare wheel (2) underneath the floor panel (3) of a motor vehicle and comprising:
- a box-section bracket (4) anchored to the floor panel (3) and comprising an external tubular body (12), which extends along a longitudinal axis (A)
- a bell (5), which can be fitted to the spare wheel (2) and can be moved with respect to the bracket (4) away from and towards a recovery position, in which the bell (5) is set up against the bracket (4); and
- a cable (6) for transmitting motion, which passes through the bracket (4) and has one first end (7) fixed to the bell (5) and one second end (8) fixed to a device for recovery of the cable (6) itself;
- a clamping assembly (35), which is arranged on the inside of the box-section bracket (4) and is set between the first end (7) of the cable (6) for transmitting motion and the bell (5) for securing the bell (5) itself in the recovery position in the event of failure of the cable (6) for transmitting motion; said clamping assembly further comprising an intermediate body (36) fixed to the bell (5) and set slidably inside the box-section bracket (4) along a vertical axis (A), mobile clamping means (46), which can move radially through the intermediate body (36), and an extractor device (48) connected to the cable (6) and set inside the intermediate body (36) for extracting the mobile clamping means (46) of the intermediate body (36) itself, moving them into a safety operating position in which they are arranged basically up against the box-section bracket (4); said
extractor device (48) further comprising a clamping terminal (49) set slidably inside a through hole (43) made through said end wall (44), anchored to the first end (7) of the cable (6) for transmitting motion, and an elastic element (50) set between the clamping terminal (49) and an end wall (44) of the intermediate body (36) ; **characterized in that** :
said clamping assembly (35) further comprising fixed clamping means (20), which are fixed to the tubular body (12) and are arranged radially inside the tubular body (12) itself so that they interfere with said mobile clamping means (46) in their safety operating positions ; said
extractor device (48) further comprising an annular containment seat (57) for containing said mobile clamping means (46), said annular seat being made on the outside of said clamping terminal (49), and an annular thrust ramp (58) made on the outside of said clamping terminal (49) in a position axially contiguous to the annular seat (57) ;
whereby said mobile clamping means (46) are defined by balls (46), which are arranged, in a resting position, inside said annular seat (57) and are pushed by the annular ramp (58) into a safety position, which is substantially on the outside of respective windows (47) made through the intermediate body (36).

2. The supporting unit according to Claim 1, **characterized in that** said fixed clamping means (20) are defined by a shoulder (20) set in a position corresponding to a bottom opening (18) of said tubular body (12).

3. The supporting unit according to Claim 2, **characterized in that** said clamping assembly (35) comprises a plurality of half-sheared portions (23) made by shearing from said tubular body (12) and arranged inside the tubular body (12) and axially upstream of said shoulder (20) to block axial sliding of a washer (42), which forms part of said extractor device (48).

4. The supporting unit according to Claim 3, **characterized in that** said half-sheared portions (23) extend substantially flush with said windows (47) and have a top inclined plane (46) for pushing the balls (46) through the windows (47).

5. The supporting unit according to Claim 3 or Claim 4,
**characterized in that** the clamping assembly (35) comprises elastic thrust means (51) for pushing said washer (42) up against the recovered portion of said cable (6) for transmitting motion.

## Patentansprüche

1. Haltevorrichtung (1) für ein externes Ersatzrad (2), wobei die Vorrichtung dafür gestaltet ist, das Ersatzrad (2) unterhalb der Bodenplatte (3) eines Kraftfahrzeugs zu halten, und Folgendes umfasst:
- eine Kastenquerschnitt-Stütze (4), die an der Bodenplatte (3) verankert ist und einen externen röhrenförmigen Körper (12) umfasst, der sich längs der Längsachse (A) erstreckt,
- eine Glocke (5), die an dem Ersatzrad (2) befestigt werden kann und in Bezug auf die Stütze (4) weg von einer Rückstellposition und hin zu derselben bewegt werden kann, in der die Glocke (5) an die Stütze (4) hochgestellt ist, und
- ein Kabel (6) zum Übertragen einer Bewegung, das durch die Stütze (4) hindurchgeht und ein erstes Ende (7), das an der Glocke (5) befestigt ist, und ein zweites Ende (8), das an einer Einrichtung zum Rückstellen des Kabels (6) selbst befestigt ist, hat,
- eine Klemmbaugruppe (35), die auf der Innenseite der Kastenquerschnitt-Stütze (4) angeordnet ist und im Fall eines Versagens des Kabels (6) zum Übertragen einer Bewegung zwischen dem ersten Ende (7) des Kabels (6) zum Übertragen einer Bewegung und der Glocke (5) selbst in der Rückstellposition angeordnet ist, wobei die Klemmbaugruppe ferner einen Zwischenkörper (36), der an der Glocke (5) befestigt und verschiebbar längs einer vertikalen Achse (A) innerhalb der Kastenquerschnitt-Stütze (4) angeordnet ist, bewegliche Klemm-Mittel (46), die sich in Radialrichtung durch den Zwischenkörper (36) bewegen können, und eine Auszieheinrichtung (48) umfasst, die mit dem Kabel (6) verbunden und innerhalb des Zwischenkörpers (36) angeordnet ist, um die beweglichen Klemm-Mittel (46) des Zwischenkörpers (36) selbst herauszuziehen, was sie in eine Sicherheitsbetriebsposition bewegt, in der sie grundsätzlich aufwärts an der Kastenquerschnitt-Stütze (4) angeordnet sind, wobei die Auszieheinrichtung (48) ferner einen verschiebbar innerhalb eines durch die Stirnwand (44) hergestellten Durchgangslochs (43) angeordneten Klemmanschluss (49), der an dem ersten Ende (7) des Kabels (6) zum Übertragen einer Bewegung angeordnet ist, und ein elastisches Element (50), das zwischen dem Klemmanschluss (49) und einer Stirnwand (44) des Zwischenkörpers (36) angeordnet ist, umfasst,
**dadurch gekennzeichnet, dass** die Klemmbaugruppe (35) ferner unbewegliche Klemm-Mittel (20) umfasst, die an dem röhrenförmigen Körper (12) befestigt sind und in Radialrichtung innerhalb des röhrenförmigen Körpers (12) selbst angeordnet sind, so dass sie sich in ihrer Sicherheitsbetriebsposition mit den beweglichen Klemm-Mitteln (46) überlagern, wobei die Auszieheinrichtung (48) ferner eine ringförmige Einschlussaufnahme (57) zum Einschließen der beweglichen Klemm-Mittel (46), wobei die ringförmige Aufnahme an der Außenseite des Klemmanschlusses (49) hergestellt ist, und eine ringförmige Schubrampe (58), die in einer Position, die sich in Axialrichtung an die ringförmige Aufnahme (57) anschließt, an der Außenseite des Klemmanschlusses (49) hergestellt ist, umfasst, wodurch die beweglichen Klemm-Mittel (46) durch Kugeln (46) definiert werden, die in einer Ruheposition innerhalb der ringförmigen Aufnahme (57) angeordnet sind und durch die ringförmige Rampe (58) in einer Sicherheitsposition geschoben werden, die sich im Wesentlichen an der Außenseite von jeweiligen Fenstern (47) befindet, die durch den Zwischenkörper (36) hergestellt sind.

2. Haltevorrichtung nach Anspruch 1, **dadurch gekennzeichnet, dass** die unbeweglichen Klemm-Mittel (20) durch einen Absatz (20) definiert werden, der in einer Position angeordnet ist, die einer Bodenöffnung (18) des röhrenförmigen Körpers (12) entspricht.

3. Haltevorrichtung nach Anspruch 2, **dadurch gekennzeichnet, dass** die Klemmbaugruppe (35) mehrere halb abgescherte Abschnitte (23) umfasst, die durch Abscheren von dem röhrenförmigen Körper (12) hergestellt und innerhalb des röhrenförmigen Körpers (12) und in Axialrichtung aufwärts von dem Absatz (20) angeordnet sind, um ein Gleiten einer Scheibe (42), die einen Teil der Auszieheinrichtung (48) bildet, in Axialrichtung zu blockieren.

4. Haltevorrichtung nach Anspruch 3, **dadurch gekennzeichnet, dass** sich die halb abgescherten Abschnitte (23) im Wesentlichen bündig mit den Fenstern (47) erstrecken und eine obere geneigte Ebene (46) haben, um die Kugeln (46) durch die Fenster (47) zu schieben.

5. Haltevorrichtung nach Anspruch 3 oder Anspruch 4, **dadurch gekennzeichnet, dass** die Klemmbaugruppe (35) elastische Schubmittel (51) umfasst, um die Scheibe (42) nach oben an den zurückgestellten Abschnitt des Kabels (6) zum Übertragen einer Bewegung zu schieben.

## Revendications

1. Unité de support (1) destinée à une roue de secours externe (2), ladite unité étant conçue pour supporter la roue de secours (2) en dessous du plancher (3) d'un véhicule automobile, et comprenant :
un support de section en caisson (4) fixée au plancher (3) et comprenant un corps tubulaire extérieur (12), s'étendant le long d'un axe longitudinal (A) ;
une cloche (5) qui peut être montée sur la roue de secours (2) et peut être déplacée par rapport au support (4) loin de et vers une position de récupération, dans laquelle la cloche (5) est disposée contre le support (4) ; et
un câble (6) destiné à transmettre le mouvement, qui traverse le support (4) et comprend une première extrémité (7) fixée à la cloche (5) et une seconde extrémité (8) fixée à un dispositif destiné à la récupération du câble (6) lui-même;
un ensemble de serrage (35) disposé à l'intérieur du support de section en caisson (4) et fixé entre la première extrémité (7) du câble (6) pour transmettre le mouvement et la cloche (5) pour fixer la cloche (5) elle-même dans la position de récupération en cas de défaillance du câble (6) pour transmettre le mouvement ; ledit ensemble de serrage comprenant également un corps intermédiaire (36) fixé à la cloche (5) et disposé de façon coulissante à l'intérieur du support de section en caisson (4) le long d'un axe vertical (A), des moyens de serrage mobile (46), qui peuvent se déplacer radialement à travers le corps intermédiaire (36), et un dispositif d'extracteur (48) raccordé au câble (6) et disposé à l'intérieur du corps intermédiaire (36) pour extraire le moyen de serrage mobile (46) du corps intermédiaire (36) lui-même, les déplaçant dans une position opérationnelle de sécurité dans laquelle ils sont agencés essentiellement contre le support de section en caisson (4) ;
ledit dispositif d'extracteur (48) comprenant également un terminal de serrage (49) disposé de façon coulissante à l'intérieur d'un trou traversant (43) réalisé à travers ladite paroi d'extrémité (44) fixé à la première extrémité (7) du câble (6) pour transmettre le mouvement, et un élément élastique (50) disposé entre le terminal de serrage (49) et une paroi d'extrémité (44) du corps intermédiaire (36);
**caractérisé en ce que** :
ledit ensemble de serrage (35) comprend également des moyens de serrage fixes (20) fixés au corps tubulaire (12) lui-même de telle sorte qu'ils interfèrent avec lesdits moyens de serrage mobiles (46) dans leur position opérationnelle de sécurité ;
ledit dispositif d'extracteur (48) comprenant également un siège de confinement annulaire (57) pour contenir lesdits moyens de serrage mobiles (46), ledit siège annulaire étant réalisé sur l'extérieur dudit terminal de serrage (49), et une rampe de poussée annulaire (58) réalisée à l'extérieur dudit terminal de serrage (49) dans une position axialement contiguë au siège annulaire (57) ;
moyennant quoi lesdits moyens de serrage mobiles (46) sont définis par des billes (46) agencées dans une position de repos, à l'intérieur dudit siège annulaire (57) et sont poussées par la rampe annulaire (58) dans une position de sécurité sensiblement à l'extérieur de fenêtres (47) respectives réalisées à travers le corps intermédiaire (36).

2. Unité de support selon la revendication 1, **caractérisée en ce que** lesdits moyens de serrage fixes (20) sont définis par un épaulement (20) fixé dans une position correspondant à une ouverture inférieure (18) dudit corps tubulaire (12).

3. Unité de support selon la revendication 2, **caractérisée en ce que** ledit ensemble de serrage (35) comprend une pluralité de parties cisaillées à moitié (23) réalisées par un cisaillement à partir dudit corps tubulaire (12) et agencées à l'intérieur dudit corps tubulaire (12) et axialement en amont dudit épaulement (20) pour bloquer le coulissement axial d'une rondelle (42), qui fait partie dudit dispositif d'extracteur (48).

4. Unité de support selon la revendication 3, **caractérisée en ce que** lesdites parties cisaillées à moitié (23) s'étendent sensiblement en affleurement avec lesdites fenêtres (47) et comprennent un plan supérieur incliné (46) pour pousser les billes (46) à travers les fenêtres (47).

5. Unité de support selon la revendication 3 ou la revendication 4, **caractérisée en ce que** l'ensemble de serrage (35) comprend des moyens de poussée élastique (51) destinés à pousser ladite rondelle (42) contre la partie recouverte dudit câble (6) pour transmettre le mouvement.
